# EUROPÄISCHE PATENTANMELDUNG

(11) **EP 1 116 927 A2**
(43) Veröffentlichungstag der Anmeldung: **18.07.2001**
(21) Anmeldenummer: 00125726.0
(22) Anmeldetag: 24.11.2000
(51) Int. Cl.: F28D 9/00, F28F 3/04

(54) **Plattentapel-Wärmeübertrager, insbesondere zur Verwendung als Reformierungsreaktor**

(30) Priorität: 13.01.2000 DE 10001065
(71) Anmelder: XCELLSIS GmbH, 73230 Kirchheim / Teck-Nabern (DE)
(72) Erfinder: Motzet, Bruno, 73235 Weilheim/Teck (DE); Tischler, Alois, 94501 Aidenbach (DE); Weisser, Marc, 73277 Owen/T. (DE)
(74) Vertreter: Kocher, Klaus-Peter Dipl.-Phys

(57) **Zusammenfassung**

Wärmeübertrager mit einem Stapel wärmeleitfähiger Plattenelemente (1A-1D) mit Wellprofil, die unter Bildung einer ersten Kanalstruktur (14) und einer von der ersten fluidgetrennten, zweiten Kanalstruktur (15) entlang aneinanderstoßender Wellprofilbereiche fluiddicht verbunden sind.

Das Wellprofil der Plattenelemente (1A-1D) beeinhaltet wenigstens zwei Wellentypen unterschiedlicher Weite, von denen ein erster Wellentyp (10) den oder die Kanäle der ersten Kanalstruktur (14) und ein zweiter Wellentyp (11) den oder die Kanäle der zweiten Kanalstruktur (15) definiert, wobei der oder die Kanäle der ersten Kanalstruktur einen größeren Durchtrittsquerschnitt haben als der oder die Kanäle der zweiten Kanalstruktur.

Verwendung z.B. als Reformierungsreaktor zur Wasserstoffgewinnung in Brennstoffzellenfahrzeugen.

## Beschreibung

Die Erfindung bezieht sich auf einen Plattenstapel-Wärmeübertrager nach dem Oberbegriff des Anspruchs 1.

Derartige Wärmeübertrager in Plattenbauweise, auch Scheibenbauweise bezeichnet, sind z.B. in der Offenlegungsschrift WO 97/15798 (PCT/SE96/01339) offenbart und für unterschiedliche Anwendungen in Gebrauch, wie für Reformierungsreaktoren, z.B. zur Wasserstofferzeugung durch Wasserdampfreformierung eines Kohlenwasserstoffs oder Kohlenwasserstoffderivats in stationären oder mobilen Anlagen, wie Brennstoffzellenfahrzeugen, und für gasbeheizte Verdampfer.

Herkömmlicherweise beinhaltet das Wellprofil der Plattenelemente meist eine gleichmäßige Wellenstruktur, bei der die Wellen von einem einzigen Typ sind, z.B. die Form einer Sinuswelle haben, und periodisch ohne Abstand aufeinanderfolgen. Dies führt zu gleich großen oder jedenfalls weitgehend gleich großen Querschnitten der beiden fluidgetrennten Kanalstrukturen, die durch das Stapeln der Wellprofil-Plattenelemente und deren fluiddichtes Verbinden längs der Berührungsstellen gebildet sind. Durch jede Kanalstruktur, z.B. einer durch den Stapel erhaltenen Kreuzkanalstruktur, kann ein zugehöriges Medium hindurchgeleitet werden, um über die wärmeleitfähigen Plattenelemente Wärme vom einen zum anderen Medium zu übertragen.

Für bestimmte Anwendungsfälle ist ein Wärmeübertrager der eingangs genannten Art wünschenswert, bei dem die eine Kanalstruktur einen deutlich größeren Querschnitt besitzt als die andere, z.B. zur Realisierung eines kompakten Reformierungsreaktors, der sich insbesondere für mobile Anwendungen eignet, wie in Brennstoffzellenfahrzeugen. Bei dieser Anwendung bildet die eine Kanalstruktur einen Reformierungsreaktionsraum und die andere Kanalstruktur einen Temperierraum zur Temperierung des Reformierungsreaktionsraums. Der Temperierraum leistet die benötigte Zufuhr oder Abfuhr zu bzw. vom Reformierungsreaktionsraum und kann bei Bedarf so ausgelegt sein, dass er eine Zusatzfunktion erfüllt. Beispielsweise kann er eine mit einem Reformierungsreaktionsraum über die Plattenelemente in Wärmekontakt stehende CO-Oxidationsstufe oder einen katalytischen Brenner bilden. Für den Reformierungsreaktionsraum ist eine Kanalstruktur mit relativ großem Querschnitt wünschenswert, um viel Katalysatormaterial in Form einer Pelletschüttung einbringen zu können, während für den Temperierraum, der z.B. auch mit einem Heißgas oder Temperieröl beheizbar ausgelegt sein kann, ein kleinerer Querschnitt ausreicht, was zur Erzielung turbulenter Strömungsverhältnisse sogar häufig günstig ist.

Der Erfindung liegt als technisches Problem die Bereitstellung eines Wärmeübertragers der eingangs genannten Art zugrunde, der sich mit relativ geringem Aufwand fertigen läßt und Kanalstrukturen unterschiedlichen Querschnitts für wenigstens zwei in Wärmekontakt zu bringende Medien zur Verfügung stellt und sich bei Bedarf insbesondere zur Realisierung eines kompakten Reformierungsreaktors oder Verdampfers eignet.

Die Erfindung löst dieses Problem durch die Bereitstellung eines Plattenstapel-Wärmeübertragers mit den Merkmalen des Anspruchs 1. Bei diesem Wärmeübertrager besteht der Plattenstapel aus Plattenelementen, deren Wellprofil wenigstens zwei Wellentypen unterschiedlicher Weite beinhaltet, wobei mit "Weite" die Querschnittsfläche einer jeweiligen Halbwelle bezeichnet ist, d.h. das Flächenintegral unter der zugehörigen Wellenkurve in der Querschnittsansicht. Der eine Wellentyp definiert die eine Kanalstruktur, während der andere Wellentyp die andere Kanalstruktur definiert, wobei die Anordnung der Plattenelemente im Stapel und die Gestaltung des Wellprofils so gewählt sind, dass der oder die Kanäle der einen Kanalstruktur einen größeren Querschnitt als der oder die Kanäle der anderen Kanalstruktur aufweisen, was durch die unterschiedliche Weite der beiden zugehörigen Wellentypen in einfacher Weise realisierbar ist. Dadurch werden, wie gewünscht, zwei Kanalstrukturen mit unterschiedlichem Durchtrittsquerschnitt für zwei in Wärmekontakt zu bringende Medien in dem kompakt in Plattenbauweise gebauten Wärmeübertrager bereitgestellt.

In einer vorteilhaften, mit geringem Fertigungsaufwand verbundenen Ausgestaltung der Erfindung nach Anspruch 2 ist das Wellprofil mit den wenigstens zwei verschiedenen Wellentypen derart realisiert, dass im Querschnitt halbkreisförmige oder wannenförmige Eintiefungen mit Abstand voneinander in das Plattenelement eingebracht sind. Diese bilden die Halbwellen für den einen Wellentyp, während die Plattenabschnitte zwischen den voneinander beabstandeten Eintiefungen die Halbwellen des anderen Wellentyps bilden. Die unterschiedliche Weite für die beiden Wellentypen kann z.B. dadurch realisiert sein, dass die Breite der Eintiefungen deutlich größer als der Abstand je zweier Eintiefungen gewählt wird.

Vorteilhafte Ausführungsformen der Erfindung sind in den Zeichnungen dargestellt und werden nachfolgend beschrieben. Hierbei zeigen:
- Fig. 1: eine Längsschnittansicht durch einen WärmeübertragerPlattenstapel mit vier Plattenelementen mit einem halbkreisförmige Eintiefungen beinhaltenden Wellprofil und
- Fig. 2: eine Ansicht entsprechend Fig. 1, jedoch für eine Variante mit einem Plattenelement-Wellprofil mit wannenförmigen Eintiefungen.

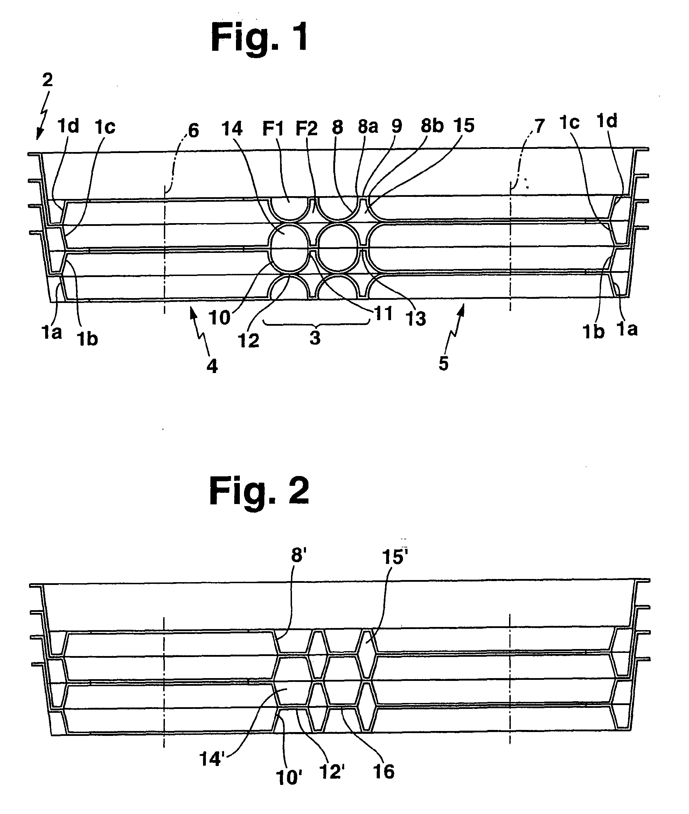

Der in Fig. 1 im Längsschnitt gezeigte Plattenstapel-Wärmeübertrager besteht aus vier aufeinandergestapelten Plattenelementen 1a, 1b, 1c, 1d, die von z.B. rechteckiger Form sind und in ihrem Randbereich 2 topfförmig hochgezogen, ineinandergelegt und fluiddicht verbunden sind. In ihrem wärmeübertragungsaktiven Bereich innerhalb des Randbereichs zwei sind die Plattenelemente 1a bis 1d mit einem Wellprofil versehen, wie es in Fig. 1 in einem mittleren Bereich 3 zu erkennen ist. An den mittleren Bereich 3 schließt sich in der Schnittebene der Fig. 1 seitlich je ein Verteiler-/Sammelkanal 4, 5 mit zur Stapelrichtung paralleler Kanallängsachse 6, 7 an. Außerhalb der Verteiler-/Sammelkanalstruktur erstreckt sich das Wellprofil der Plattenelemente 1a bis 1d bis zum Randbereich 2.

Charakteristischerweise beinhaltet das Wellprofil der Plattenelemente 1a bis 1d zwei Wellentypen unterschiedlicher Weite, d.h. unterschiedlicher Querschnittsfläche F1, F2. Speziell besteht das Wellprofil in diesem Beispiel im Querschnitt aus halbkreisförmigen Eintiefungen 8 oder gleichbedeutend damit aus halbkreisförmigen Erhebungen, die mit Abstand voneinander derart eingebracht sind, dass zwischen je zwei einander zugewandten Randkanten 8a, 8b benachbarter Eintiefungen ein stegförmiger, ebener Plattenabschnitt 9 verbleibt. Auf diese Weise bildet die Aufeinanderfolge von je einer Eintiefung 8 und eines ebenen Plattenabschnitts 9 eine Wellstruktur mit abwechselnd je einer breiteren, kreisbogenförmigen Halbwelle 10 und einer schmaleren, abgeplatteten Halbwelle 11, d.h. eine hybride Wellstruktur mit quasi-alternierender Wellenlänge.

Die Eintiefungen 8 bzw. Erhebungen sind an den jeweils gleichen Stellen in die verschiedenen Plattenelemente la bis 1d so eingebracht, dass in Plattenstapelrichtung Eintiefungen und Erhebungen alternierend aufeinanderfolgen. Dies hat zur Folge, dass jedes innere Plattenelement 1b, 1c auf der einen Seite mit seinen kreisbogenförmigen Halbwellen 10 gegen die kreisbogenförmigen Halbwellen 10 des einen benachbarten Plattenelementes und auf der anderen Seite mit seinen abgeplatteten Halbwellen 11 gegen die abgeplatteten Halbwellen des anderen benachbarten Plattenelementes anliegt. Entlang der dadurch gebildeten Berührlinien bzw. -flächen der aneinanderstoßenden kreisbogenförmigen Halbwellen 10 und der aneinanderstoßenden abgeplatteten Halbwellen 11 sind die Plattenelemente 1a bis ld in gleicher Weise wie im Randbereich 2 fluiddicht miteinander verbunden, z.B. durch Löten oder Schweißen.

Dieser Wärmeübertrageraufbau stellt folglich zwei Kanalstrukturen mit jeweils einer Mehrzahl parallel durchströmbarer Kanäle 14, 15 zur Verfügung, wobei die Kanäle 14 der einen, ersten Kanalstruktur von je zwei gegenüberliegenden halbkreisförmigen Eintiefungen 8 und die Kanäle 15 der anderen, zweiten Kanalstruktur von je zwei gegenüberliegenden abgeplatteten Wellstrukturabschnitten definiert sind. Da der freie Querschnitt F1 der halbkreisförmigen Eintiefungen 8 merklich größer gewählt ist als der freie Querschnitt F2 der abgeplatteten Wellenbereiche zwischen je zwei Eintiefungen 8, ist der dem doppelten freien Querschnitt entsprechende Durchtrittsquerschnitt für die Kanäle 14 der ersten Kanalstruktur entsprechend größer als derjenige der Kanäle 15 der zweiten Kanalstruktur.

Wie aus Fig. 1 weiter ersichtlich, grenzen durch die beschriebene Gestaltung des Wellprofils an jeden Kanal der einen Kanalstruktur mehrere Kanäle der anderen Kanalstruktur umfangsseitig an, so dass im Betrieb des Wärmeübertragers, in welchem ein erstes Medium durch die erste Kanalstruktur und ein zweites Medium durch die zweite Kanalstruktur hindurchgeleitet wird, eine effektive Wärmeübertragung von einem auf das andere Medium über die Wellprofilwandungen erfolgt. Es versteht sich, dass die Plattenelemente 1a bis 1d zu diesem Zweck aus einem wärmeleitfähigen Material herstellt sind. Die Dicke der Plattenelemente 1a bis 1d ist variabel je nach Anwendungsfall wählbar und kann z.B. so gering sein, dass die Plattenelemente 1a bis 1d von flexiblen Folien gebildet sind.

Der Wärmeübertrager von Fig. 1 kann beispielsweise als kompakter Reformierungsreaktor zur Wasserstofferzeugung in einem Brennstoffzellenfahrzeug dienen. Dazu wird die erste Kanalstruktur mit den großvolumigeren Kanälen 14 als Reformierungsreaktionsraum verwendet, wozu die zugehörigen Kanäle 14 mit einer geeigneten Katalysatorschüttung beladen werden. Die zweite Kanalstruktur mit den engeren Kanälen 15 kann als katalytischer Brenner, als CO-Oxidationsstufe oder einfach als Temperierraum für ein geeignetes Wärmeträgermedium, wie Öl, Glykol etc., ausgelegt werden, um die Reformierungsreaktionsraumkanäle ausreichend zu beheizen. Im Fall der Auslegung als CO-Oxidationsstufe wird der zweiten Kanalstruktur 15 z.B. ein Reformatgas zwecks Gasreinigung, d.h. Minderung der CO-Konzentration durch selektive Kohlenmonoxid-Oxidation, zugeführt.

Als weitere Vorteile des Wärmeübertrageraufbaus von Fig. 1 sind neben einem guten Wärmeübertragungs-Wirkungsgrad der geringe Fertigungsaufwand und die hohe mechanische Druckstabilität durch die inneren Berührkontaktverbindungen der Plattenelemente 1a bis 1d untereinander bei vergleichsweise geringem Gewicht zu nennen. Im Fall einer in die Kanäle 14 mit dem größeren Durchtrittsquerschnitt zwecks Realisierung eines Reformierungsreaktors eingebrachten Katalysatorschüttung läßt sich bei gegebener Baugröße des Reaktors ein hoher Reformierungsumsatz erzielen, da viel Reformierungskatalysatormaterial eingebracht und die Prozeßgasströmung in den Reaktionsraumkanälen gut verteilt werden kann.

Es versteht sich, dass der modulare Wärmeübertrageraufbau je nach Bedarf statt der gezeigten vier Plattenelemente jede andere Anzahl von gestapelten Plattenelementen umfassen kann. Alternativ zur oben beschriebenen Funktion als Reformierungsreaktor kann der Wärmeübertrager z.B. auch als Verdampfer eingesetzt werden, beispielsweise zur dynamischen Verdampfung von Kohlenwasserstoffen, die in einem Reformierungsreaktor oder anderweitig verwendet werden.

Fig. 2 zeigt eine Variante des Wärmeübertageraufbaus von Fig. 1, die sich von diesem in der Querschnittsform der Eintiefungen unterscheidet. Speziell sind in diesem Fall zur Realisierung des strömungskanalbildenden Wellprofils der Plattenelemente wannenförmige Eintiefungen 8' bzw. Erhebungen vorgesehen. Dies hat zur Folge, dass die zugehörigen Halbwellen 10' größerer Weite in diesem Beispiel einen breiten abgeplatteten Wellenbergabschnitt aufweisen, wodurch sich breitere bzw. rautenförmige Berührflächen 12' ergeben, längs derer diese Halbwellen 10' benachbarter Plattenelemente gegeneinander anliegen. Da somit im Gegensatz zu den korrespondierenden, eher punkt- bzw. linienförmigen Berührflächen 12 des Beispiels von Fig. 1 beim Wärmeübertrager von Fig. 2 relativ breite Berührflächenstege 12' vorliegen, können die Plattenelemente in diesem Bereich mit Durchbrüchen 16 versehen sein, wie dies in Fig. 2 gezeigt ist, ohne dass die Gefahr einer Undichtigkeit zwischen einem der Kanäle 14' größeren Querschnitts der ersten Kanalstruktur und einem der Kanäle 15' kleineren Querschnitts der zweiten Kanalstruktur besteht. Die Durchbrüche 16 schaffen eine Fluidverbindung jeweils zwischen den in einer Reihe parallel zur Stapelrichtung aufeinanderfolgenden Kanälen 14' der ersten Kanalstruktur mit dem größeren Durchtrittsquerschnitt.

Im übrigen ergeben sich für die Variante von Fig. 2 dieselben Eigenschaften und Vorteile, wie sie oben zum Ausführungsbeispiel von Fig. 1 angegeben sind, worauf verwiesen werden kann.

Es versteht sich, dass im Rahmen der Erfindung bei Bedarf auch Wärmeübertrager vorgesehen sein können, deren Plattenelemente ein Wellprofil mit drei oder mehr verschiedenen Wellentypen aufweisen, wobei sich die zugehörigen Halbwellen in ihrem freien Querschnitt, d.h. ihrem Flächenintegral, unterscheiden, jedoch von gleicher Amplitude sind, so dass die Halbwellen aller Wellentypen beim Aneinanderlegen je zweier Plattenelemente sich jeweils in einer gemeinsamen Berührebene berühren und dort fluiddicht zur Bildung einer entsprechenden Anzahl unterschiedlicher Kanalstrukturen verbunden werden können.

Durch geeignete Wahl des Verlaufs der Wellprofile für die Plattenelemente parallel zur Plattenebene, d.h. senkrecht zur Stapelrichtung, ist je nach Bedarf die Realisierung unterschiedlicher Kanalstrukturtypen möglich. So kann beispielsweise eine Kreuzkanalstruktur mit rechteckförmigen Plattenelementen dadurch gebildet werden, dass die Plattenelemente in den vier Eckbereichen mit geeigneten, Sammel- und Verteilerkanäle bildenden Öffnungen und im übrigen mit einem in der Draufsicht auf die Plattenelemente V-förmigen Wellprofil versehen sind, wobei je zwei im Stapel einander zugewandte, gegeneinander anliegende Wellprofile benachbarter Plattenelemente gegensinnig V-förmig verlaufen. Vorzugsweise bilden die Wellprofile hierbei eine Reihe von in Plattenlängsrichtung aufeinanderfolgenden Wellen mit V-förmiger Wellenlängserstreckung zwischen den beiden Plattenbreitseiten mit in etwa in der Plattenlängsmittelebene liegendem V-Bogenbereich, wobei die V-Wellen mit ihren V-Bogenbereichen für ein jeweiliges Plattenelement in Richtung der einen Schmalseite und für ein benachbarten Plattenelement in Richtung der gegenüberliegenden Schmalseite zeigen.

Alternativ ist eine kanalbündelförmige Strömungskanalstruktur mit wiederum rechteckförmigen, in den Eckbereichen mit Sammelund Verteilerkanäle bildenden Öffnungen versehenen Plattenelementen möglich, indem ein Wellprofil mit mehreren Wellen vorgesehen wird, die sich in ihrer Wellenlängsrichtung zwischen je zwei einander diagonal gegenüberliegenden, eckseitigen Öffnungen erstrecken. Dabei erstrecken sich die Wellen je zweier benachbarter Plattenelemente zwischen je zwei verschiedenen der beiden Paare sich diagonal gegenüberliegender, eckseitiger Öffnungen. Dadurch werden zwei Gruppen von im Plattenstapel alternierend angeordneten, senkrecht zur Stapelrichtung verlaufenden Kanalbündeln gebildet, die sich jeweils zwischen einem zugeordneten Verteiler- und einem zugeordneten Sammelkanal erstrecken, so dass ein erstes Medium durch die eine Hälfte der Kanalbündelschichten im Stapel und ein zweites Medium durch die dazu alternierend im Stapel angeordneten, übrigen Kanalbündelschichten hindurchgeleitet werden können, um die beiden Medien effektiv in Wärmekontakt zu bringen. Bei der Gestaltung mit kanalbündelartiger Strömungskanalstruktur können Wellprofile verwendet werden, die Wellen unterschiedlicher Amplitude beinhalten. Es ist dann nur dafür zu sorgen, dass die Wellentäler je eines Plattenelementes linienförmig entlang ihrer Längserstreckung mit den Wellenbergen des benachbarten, zugewandten Plattenelementes in Berührkontakt sind, wozu die Wellen des benachbarten Plattenelementes korrespondierend unterschiedliche Amplituden aufweisen. Für diese Realisierung sind z.B. Wellprofile mit DoppelhöckerWellen verwendbar.

## Patentansprüche

1. Wärmeübertrager mit
- einem Stapel wärmeleitfähiger Plattenelemente (1a bis 1d) mit Wellprofil, die unter Bildung einer ersten Kanalstruktur (14) und einer von der ersten fluidgetrennten, zweiten Kanalstruktur (15) entlang aneinanderstoßender Wellprofilbereiche (12, 13) fluiddicht verbunden sind,
**dadurch gekennzeichnet, daß**
- das Wellprofil der Plattenelemente (1a bis 1d) wenigstens zwei Wellentypen unterschiedlicher Weite beinhaltet, von denen ein erster Wellentyp (10) den oder die Kanäle (14) der ersten Kanalstruktur und ein zweiter Wellentyp (11) den oder die Kanäle (15) der zweiten Kanalstruktur definiert, und
- der oder die Kanäle der ersten Kanalstruktur einen größeren Durchtrittsquerschnitt haben als der oder die Kanäle der zweiten Kanalstruktur.

2. Wärmeübertrager nach Anspruch 1, weiter
**dadurch gekennzeichnet, daß**
das Wellprofil aus im Querschnitt halbkreisförmigen oder wannenförmigen Eintiefungen oder Erhebungen (8) besteht, die voneinander durch ebene Plattenabschnitte (9) beabstandet sind.
